# EUROPEAN PATENT APPLICATION

(11) **EP 2 042 762 A1**
(43) Date of publication of application: **01.04.2009**
(21) Application number: 08253144.3
(22) Date of filing: 26.09.2008
(51) Int. Cl.: F16C 33/66, F16C 33/76

(54) **Lubrication mechanism for bearing**

(30) Priority: 28.09.2007 JP 2007255274
(71) Applicant: Toyota Jidosha Kabushiki Kaisha, Toyota-shi, Aichi-ken 471-8571 (JP)
(72) Inventor: Homan, Akinori, Toyota-shi Aichi-ken 471-8571 (JP)
(74) Representative: Albutt, Anthony John

(57) **Abstract**

A lubrication mechanism for a bearing is provided having an outer race (31); an inner race (32) located radially inward of the outer race; a rolling element (33) interposed between the outer race and the inner race; and a pair of shield members (35,36) provided on both sides of the outer race and the inner race. The outer race, the inner race and the pair of shield members define an interior space (37) located inside the pair of shield members and an exterior space located outside the pair of shield members. The interior space is filled with lubricant. A communication hole (38) communicating between the interior space and the exterior space is formed in the pair of shield members, and a guide portion (41,42) that guides the lubricant in the interior space to the exterior space through the communication hole. Alternatively, the pair of shield members have a plurality of indentations that communicates between the interior and exterior space.

## Description

### BACKGROUND OF THE INVENTION

### 1. Field of the Invention

This invention relates to a lubrication mechanism for a bearing that reduces agitation torque generated when lubricant in the bearing is agitated.

### 2. Description of the Related Art

A bearing having an outer race, an inner race, plural rollers and spacers located between adjacent rollers is available. The spacer in a lubrication mechanism for the bearing has a concave portion that contacts a rolling surface of the roller and receives the roller. The spacer further has an extended portion that contacts a roller end face at an end in the axial direction of the spacer. The extended portion is supported by an annular side plate fixed to the inner race or outer race. Tap holes that communicate between the inside and outside of the bearing are formed in the side plates at 60 degree intervals. Bolts are screwed into the tap holes, and the side plate is pulled out from the roller bearing by the bolt fastening reaction force. In addition, the interior of the bearing is filled with lubricant, and the tap holes also function as lubrication holes, through which lubricant is allowed to communicate between the inside and outside of the bearing. According to this lubrication mechanism for the bearing, lubricant in the bearing is discharged to the outside through the tap holes, and the agitation torque of the lubricant generated at the spacer near the rolling surface is reduced when the bearing rotates. Thus, a higher allowable rotation speed is realized. (see, for example, Japanese Patent Application Publication No. 2007-92983 (JP-A-2007-92983))

In the above-described lubrication mechanism of the bearing, the tap holes formed in the side plates are mainly provided to easily pull out the side plates from the roller bearing. The tap holes are formed such that the roller end face is not scratched when bolts are screwed into the tap holes. Therefore, the tap holes must be formed at the positions where bolts do not scratch the roller end face. Thus, the positions in the circumferential direction at which the tap holes are formed are limited. In addition, because the inner diameter of the tap hole is relatively small, it is not enough big to discharge the lubricant in the roller bearing to the outside. Therefore, the reduction in the agitation torque is not sufficient when the bearing rotates. Furthermore, because screw threads to be threaded with the bolt are formed on the inner wall of the tap hole, the screw threads increase resistance to the flow of the lubricant, when the lubricant inside the bearing flows through the tap holes. Consequently, lubricant is not easily discharged from the inside to the outside of the bearing, and the reduction in the agitation torque is not sufficient when the bearing rotates.

### SUMMARY OF THE INVENTION

The present invention provides a lubrication mechanism for a bearing that reduces the agitation torque generated when the lubricant in the bearing is agitated.

A first aspect of the present invention provides a lubrication mechanism for a bearing, that includes an outer race; an inner race located radially inward of the outer race; a rolling element interposed between the outer race and the inner race; and a pair of shield members provided on both sides of the outer race and the inner race. The outer race, the inner race and the pair of shield members define an interior space located inside the pair of shield members and an exterior space located outside the pair of shield members, and the interior space is filled with lubricant. A communication hole communicating between the interior space and the exterior space is formed in the pair of shield members. The lubrication mechanism further includes a guide portion that guides the lubricant in the interior space to the exterior space through the communication hole.

According to the first aspect of the present invention, because the bearing has a pair of shield members that closes the interior space between the outer race and the inner race, it is more difficult for lubricant to flow from the exterior space of the bearing into the interior space thereof, as compared when no shield member is provided. Meanwhile, when the inner race and the rolling element rotate, the lubricant in the interior space flows along with the rotation. At this moment, the lubricant is guided to the communication hole by the guide portion, and thus, it becomes easier for the lubricant to be discharged to the exterior space. Accordingly, the amount of lubricant in the interior space is reduced when the bearing rotates, thereby reducing the agitation torque generated when the lubricant in the interior space is agitated.

The guide portion may include a protruding piece that protrudes from the inside surface of the pair of shield members toward the interior space.

According to this construction, the lubricant flowing within the interior space is guided by the protruding piece and is discharged to the exterior space through the communication hole smoothly. Accordingly, the amount of lubricant in the interior space is securely reduced.

Alternatively, the guide portion may include a protruding piece that protrudes from the outside surface of the pair of shield members toward the exterior space.

According to this construction, the lubricant flowing within the interior space is smoothly discharged to the exterior space through the communication hole, and is guided by the protruding piece to be discharged to the exterior space. Accordingly, the amount of lubricant in the interior space is securely reduced.

The guide portion may include a pair of protruding pieces facing each other across the communication hole.

According to this construction, because the guide portion is formed of a pair of protruding pieces facing each other across the communication hole, when the inner race rotates positively or inversely, lubricant is guided by either one of the protruding pieces, and is securely discharged to the exterior space. As a result, when the bearing is fixed to a bearing fixing member, such as a case, either one of the side surfaces of the bearing can be directed to a top or a bottom. Accordingly, it is not required to confirm the top/bottom direction of the bearing, and thus, the process for mounting the bearing becomes easier. Therefore, the productivity improves.

The protruding pieces may respectively have slits each extending in an axial direction of the pair of shield members. The slits may be apart from each other in a radial direction of the pair of shield members.

According to this construction, slits are provided respectively in the pair of protruding pieces extending along the axial direction of the shield members. The slits are apart from each other in the radial direction of the shield members. In this case, for example, when the inner race rotates in a clockwise direction and the lubricant in the interior space flows in the clockwise direction, lubricant passes through the slit formed in one protruding piece, hits the other protruding piece, and then is guided by the other protruding piece to be discharged to the exterior space. Thus, one protruding piece does not prevent the lubricant from being discharged through (the slit of) the other protruding piece. Similarly, when the inner race rotates in the counterclockwise direction and lubricant in the interior space flows in the counterclockwise direction, lubricant passes through the slit formed in the other protruding piece, hits the one protruding piece, and then is guided by the one protruding piece to be discharged to the exterior space. Thus, the other protruding piece does not prevent the lubricant from being discharged through (the slit of) the one protruding piece.

A second aspect of the present invention provides a lubrication mechanism for a bearing, that includes an outer race; an inner race located radially inward of the outer race; a rolling element interposed between the outer race and the inner race; and a pair of shield members provided on both sides of the outer race and the inner race. The outer race, the inner race and the pair of shield members define an interior space located inside the pair of shield members and an exterior space located outside the pair of shield members, and the interior space is filled with lubricant. The pair of shield members has a plurality of indentations that communicate between the interior space and the exterior space.

According to the second aspect of the present invention, because the bearing has a pair of shield members that closes the interior space between the outer race and the inner race, it is more difficult for lubricant to flow from the exterior space into the interior space of the bearing, as compared when no shield member is provided. On the other hand, when the inner race and the rolling element rotate, the lubricant in the interior space flows along with the rotation. At this moment, the lubricant is discharged through the plurality of indentations. Accordingly, the amount of lubricant in the interior space is reduced when the bearing rotates, thereby reducing the agitation torque generated when the lubricant in the interior space is agitated.

Each of the indentations may have a width in a radial direction of the pair of shield members longer than a width in a circumferential direction of the pair of shield members. According to this construction, the plural indentations are formed in a rectangular shape, and the longitudinal direction of the indentation is located perpendicular to the flow direction of lubricant. Accordingly, when lubricant flows within the interior space along with the rotation of the inner race and the rolling member, the lubricant is discharged to the exterior space from the longitudinal direction of the indentations all at once.

Alternatively, each of the indentations may have a width in a radial direction of the pair of shield members shorter than a width in a circumferential direction of the pair of shield members. According to this construction, the plural indentations are formed in a rectangular shape and the longitudinal direction is located to extend along the flow direction of lubricant. Accordingly, when lubricant flows within the interior space along with the rotation of the inner race and the rolling member, the direction of discharge of lubricant changes depending upon the flow speed of the lubricant. In other words, if the flow speed is slow, the lubricant is mainly discharged to the exterior space from the upstream side of the longitudinal direction the indentation. On the other hand, if the flow speed is fast, the lubricant is discharged to the exterior space from both the upstream and downstream sides of the longitudinal direction of the indentation.

The pair of shield members may be supported by an unrotating one fixed one of the outer race and the inner race. According to this construction, for example, when the inner race, the rolling element and a ball-cage rotate, the shield members do not rotate because they are fixed to the outer race, which is fixed not to rotate. Accordingly, when lubricant flows within the interior space, it becomes easier for the lubricant to be discharged to the exterior space through the communication holes or indentations.

As described above, because the lubricant flowing within the bearing is smoothly discharged to the exterior space through the guide portions and communication holes or indentations formed in the shield member, and the shield members prevent the lubricant from entering the interior space from the exterior space. As a result, the amount of lubricant in the bearing is maintained appropriately when the rolling element rotates, and agitation torque generated when the lubricant in the bearing is agitated is reduced.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a cross-sectional view illustrating a transfer provided with a lubrication mechanism for a ball bearing according to a first embodiment of the present invention;
FIG. 2 is a perspective view of the lubrication mechanism for the ball bearing according to the first embodiment of the present invention;
FIG. 3 is an enlarged cross-sectional view taken along the line III-III in FIG. 2;
FIG. 4A is a side elevation view illustrating the ball bearing of the first embodiment as viewed along arrow IVA in FIG. 3;
FIG. 4B is an enlarged cross-sectional view taken along the line IVB-IVB in FIG. 4A;
FIG. 5A is a partial side elevation view illustrating a ball bearing in a modified example of the lubrication mechanism for the ball bearing according to the first embodiment of the present invention;
FIG. 5B is an enlarged cross-sectional view of the ball bearing taken along the line VB-VB in FIG. 5A;
FIG. 5C is a partial side elevation view illustrating a ball bearing of a modified example of the lubrication mechanism for the ball bearing according to the first embodiment of the present invention;
FIG. 5D is an enlarged cross-sectional view of the ball bearing taken along the line VD-VD in FIG 5C;
FIG. 6A is a partial side elevation view illustrating a ball bearing of another modified example of the lubrication mechanism for the ball bearing according to the first embodiment of the present invention, viewed from the interior space side;
FIG. 6B and FIG. 6C are enlarged perspective views of the ball bearing viewed from the direction VI in FIG. 6A, showing the state of flowing lubricant;
FIG. 7A is a partial side elevation view illustrating a ball bearing of still another modified example of the lubrication mechanism for the ball bearing according to the first embodiment, viewed from the interior space side;
FIGs. 7B and 7C are enlarged perspective views of the ball bearing viewed from the side of the cross-section taken along the line VII-VII in FIG 7A, showing the state of flowing lubricant;
FIG. 8 is a perspective view illustrating a lubrication mechanism for a ball bearing according to a second embodiment of the present invention;
FIG. 9 is an enlarged cross-sectional view of the ball bearing taken along the line IX-IX in FIG 8;
FIG. 10A is a side elevation view of the lubrication mechanism for the ball bearing viewed from the direction of the arrow X shown in FIG. 9, particularly showing an example of indentations formed in the shield member, extending from the inner race side to the outer race side;
FIG. 10B is a side elevation view of the lubrication mechanism for the ball bearing viewed from the direction of the arrow X shown in FIG. 9, particularly showing an example of indentations formed in the shield member, extending from the outer race side to the inner race side;
FIG. 11A is a partial side elevation view of an example of lubrication mechanism for the ball bearing viewed from the direction of the allow X shown in FIG. 9, particularly showing an example of indentations formed in the shield member on the outer race side extending along the circumferential direction;
FIG. 11B is a side elevation view of an example of lubrication mechanism for the ball bearing viewed from the direction of the allow X shown in FIG. 9, particularly showing an example of indentations formed in the shield member on the inner race side extending along the circumferential direction;
FIG. 11C is a side elevation view of an example of lubrication mechanism for the ball bearing viewed from the direction of the allow X shown in FIG. 9, particularly showing an example of indentations that are formed alternately on the outer race side and on the inner race side and each of which extends along the circumferential direction;
FIG. 12A is a partial perspective view of a roller bearing in a lubrication mechanism for the roller bearing according to a third embodiment of the present invention;
FIG. 12B is a cross-sectional view of the roller bearing taken along the line XIIB-XIIB in FIG. 12A; and
FIG. 13 is a partial perspective view illustrating a lubrication mechanism for a roller bearing according to a fourth embodiment of the present invention.

### DETAILED DESCRIPTION OF EMBODIMENTS

A first embodiment of the present invention will be described below with reference to the drawings.

In the first embodiment of the present invention, a lubrication mechanism for a ball bearing used in a power transmission device for a vehicle is shown.

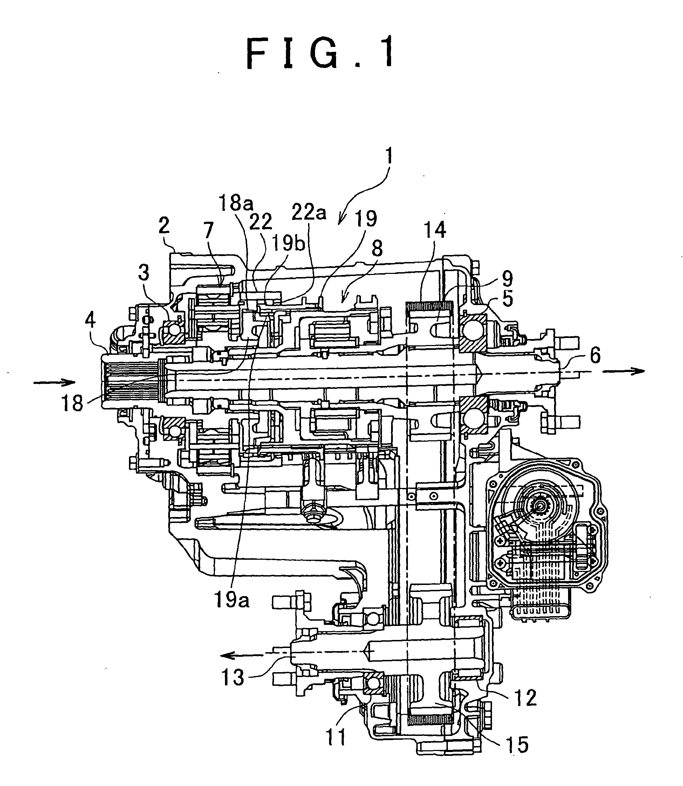

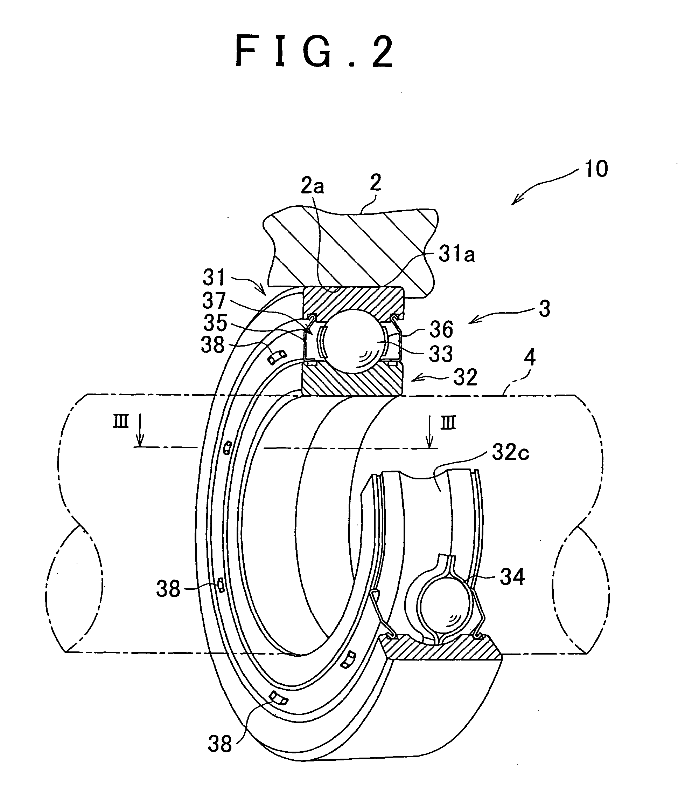

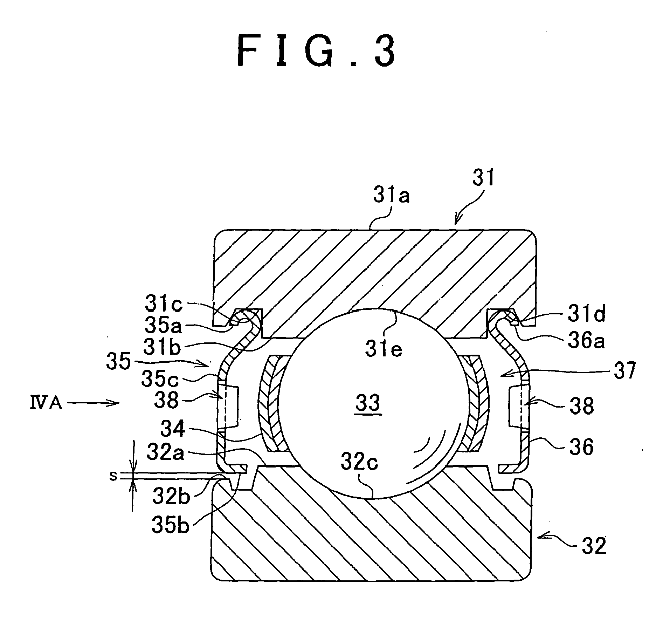

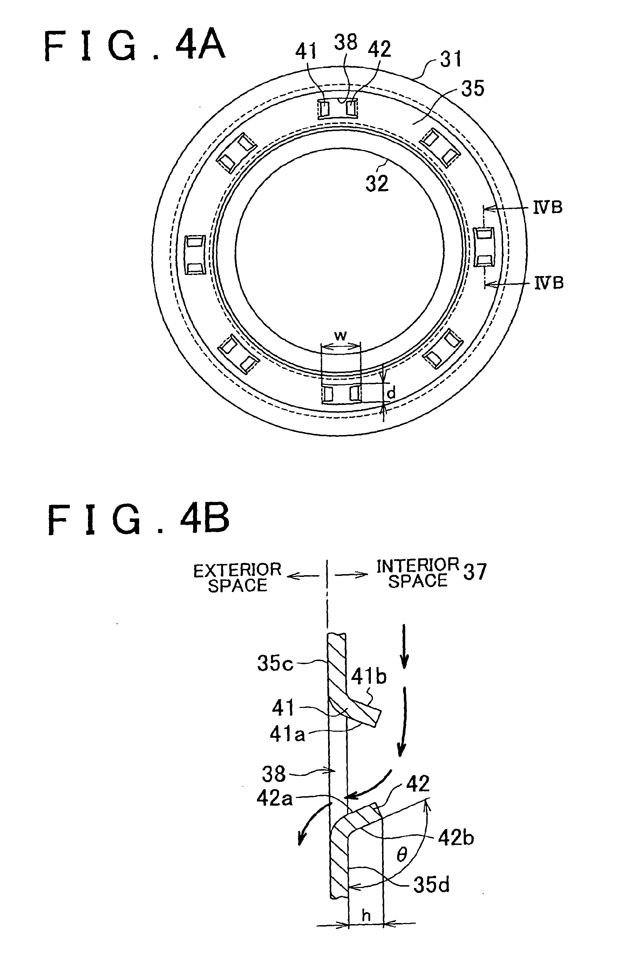

FIG 1 is a cross-sectional view illustrating a transfer provided with the lubrication mechanism for the ball bearing according to the first embodiment of the present invention. FIG. 2 is a perspective view illustrating the lubrication mechanism for the ball bearing according to the first embodiment of the present invention. FIG. 3 is an enlarged cross-sectional view of the ball bearing taken along with the line III-III in FIG. 2. FIGs. 4A and 4B are views illustrating the lubrication mechanism for the ball bearing according to the first embodiment of the present invention; more specifically, FIG. 4A is a side elevation view of the ball bearing viewed along the arrow IVA in FIG. 3, and FIG. 4B is an enlarged cross-sectional view of the ball bearing taken along the line IVB-IVB in FIG. 4A.

First, the construction of the vehicle power transmission device including the transfer for the vehicle provided with the ball bearing and the lubrication mechanism for the ball bearing according to the first embodiment of the present invention will be described.

The transfer 1 is provided with the ball bearing according to the first embodiment is located downstream of a main transmission in the direction of power transmission from the engine, receives rotary input from the main transmission and transmits power to the front wheel side and rear wheel side. The main transmission changes torque output from an engine.

As shown in FIG. 1, the transfer 1 includes a transfer case 2, an input shaft 4, a rear output shaft 6, a high-low planetary gear set 7, a center differential gear 8, a drive sprocket 9, a front output shaft 13, and a driven sprocket 15. The input shaft 4 is rotatably held by the transfer case 2 via a ball bearing 3. The rear output shaft 6 is rotatably held by the transfer case 2 via a ball bearing 5. The high-low planetary gear set 7 is connected to the input shaft 4. The center differential gear 8 is connected to the rear output shaft 6 and distributes torque between front side and the rear side. The drive sprocket 9 is connected to the rear output shaft 6. The front output shaft 13 is rotatably held by the transfer case 2 via a ball bearing 11 and a roller bearing 12. The driven sprocket 15 is connected to the front output shaft 13 and torque is transmitted from the drive sprocket 9 to the driven sprocket 15 via a chain 14.

In the transfer case 2, lubricant is injected. The lubricant flows within the transfer case 2, and lubricates constituent elements, such as bearings like a ball bearing, gears, and chains. This construction enables switching between a high gear mode, which is an operation mode at a high speed gear, and a low gear mode, which is an operation mode at a low speed gear. For example, when the vehicle is traveling on a rough road, the operation mode is switched from the high gear mode to the low gear mode to make a reduction gear ratio higher than that of normal traveling. Thus, a necessary drive power is secured and the vehicle is further switched to the four wheel drive mode.

In this transfer 1, when the high gear mode is selected, a spline 18a of a high piece 18, which is fixed to the high-low planetary gear set 7, engages with a spline 19a of a sleeve 19. Therefore, power is transmitted from the sleeve 19 to the center differential gear 8 and then to the rear output shaft 6. The power is further transmitted from the drive sprocket 9 to the front output shaft 13 via the chain 14 and the driven sprocket 15.

On the other hand, when the low gear mode is selected, a spline 22a of the low piece 22, which is fixed to the high-low planetary gear set 7, engages with a spline 19b of the sleeve 19. Therefore, power is transmitted from the sleeve 19 to the center differential gear 8 and then to the rear output shaft 6. The power is further transmitted from the drive sprocket 9 to the front output shaft 13 via the chain 14 and the driven sprocket 15.

As shown in FIG. 2 and FIG. 3, the lubrication mechanism 10 for a ball bearing of the embodiment includes a ball bearing 3. The ball bearing 3 includes an outer race 31, an inner race 32, plural rolling elements 33, ball-cages 34 that hold the rolling elements 33, and a pair of shield members 35, 36. The shield members 35, 36 are disposed between the outer race 31 and the inner race 32. Thus, the outer race 31, the inner race 32, and shield members 35, 36 define an interior space 37 located inside the shield members 35, 36, and an exterior space located outside the shield members 35, 36. The interior space 37 is filled with lubricant.

The outer race 31 is made of metal material and has an annular shape. The outer circumferential surface 31a of the outer race 31 is fixed to the shaft hole 2a of the transfer case 2. Grooves 31c, 31d are formed near the side surfaces of the outer race 31. An outer circumferential end portion 35a of the shield member 35 is fitted in the groove 31c. An outer circumferential end portion 36a of the shield member 36 is fitted in the groove 31d. Similar to the outer race 31, the inner race 32 is made of metal material and has an annular shape. The inner race 32 is located radially inward of the outer race 31. The input shaft 4 is inserted into and fixed to the inner race 32.

Each of the rolling elements 33 is made of metal material and has a spherical shape. Each rolling element 33 is rotatably interposed between a circular groove 31e formed in the inner circumferential surface 31b of the outer race 31 and a circular groove 32c formed in the center portion of the outer circumferential surface 32a of the inner race 32. Each rolling element 33 is held by the ball-cage 34. The ball-cage 34 is made of, for example, pressed sheet-metal. Inner circumferential surface of the ball-cage 34 is smooth. Ball-cages 34 respectively hold rolling elements 33 rotatably so as to avoid interferences among rolling elements 33.

The shield member 35 is made of sheet-metal and is formed in annular shape by press working, for example. The outer circumferential end portion 35a of the shield member 35 is circularly curved, and is firmly held in the groove 31c when fitted in the groove 31c. The inner circumferential end portion 35b is bent toward the rolling member 33, and the cross-section thereof has an L-shape. A gap "s" is formed between the inner circumferential end portion 35b and the outer circumferential surface 32b of the inner race 32. Thus, the inner circumferential end portion 35b does not contact the outer circumferential surface 32b of the inner race 32.

As shown in FIGs. 4A and 4B, eight communication holes 38 that communicate between the interior space 37 and the exterior space of the ball bearing 3 are formed in the side surface portion 35c of the shield member 35 at 45 degree intervals. Furthermore, a pair of protruding pieces 41, 42, which forms a guide portion, is provided to face each other across each communication hole 38 with respect to the flow direction of lubricant in the interior space 37. The pair of protruding pieces 41, 42 protrudes from the inside surface 35d toward the interior space 37. The communication hole 38 has a generally rectangular shape having width "w" in the circumferential direction of the shield member 35 and width "d" in the radial direction of the shield member 35. A portion of the side surface portion 35c of the shield member 35 is bent along each shorter side of the rectangular communication hole 38. Thus, the protruding pieces 41, 42 are integrally formed with the shield member 35. Incidentally, the communication hole 38 may be formed in any shape other than a rectangle, such as a circle or eclipse. Alternatively, pieces separate from the shield member 35 may be prepared and inserted into the communication hole 38 to form the protruding pieces 41, 42. The protruding pieces 41 and 42 may be formed by joining the separate pieces to the inside surface 35d.

The protruding pieces 41, 42 have height "h" so as not to interfere with, for example, the ball-cage 34 rotating in the ball bearing 3. The protruding pieces 41, 42 are inclined such that the angle between the inside surface 35d and the side surfaces 41b, 42b of the protruding pieces 41, 42 is θ. The width "w" of the communication hole 38 and the angle θ of the protruding pieces 41, 42 are appropriately selected based on the design conditions, such as the size or rotation speed of the ball bearing 3, or property of the lubricant.

According to this construction, as shown in FIG. 4B, when the inner race 32 of the ball bearing 3 rotates and lubricant in the interior space 37 flows along the direction of arrows, the lubricant is guided by the side surface 42a of the protruding piece 42 and is smoothly discharged to the exterior space through the communication hole 38.

The shield member 36 is similar to the shield member 35, i.e., has eight communication holes 38 and protruding pieces 41, 42. When lubricant flows, the lubricant is guided by the side surface 42a of the protruding piece 42 and is smoothly discharged to the exterior space through the communication hole 38.

The ball bearings 5 and 11 have constructions similar to that of the ball bearing 3.

Hereinafter, effects of the lubrication mechanism 10 for the ball bearing according to the first embodiment of the present invention will be described. When an engine (not shown) starts, the input shaft 4 is rotated by the torque input from the main transmission, which is disposed between the engine and the transfer 1 (i.e., upstream of the transfer 1 in the direction of power transmission from the engine), and the inner race 32 fixed to the input shaft 4 also rotates. In this state, along with the rotation of the inner race 32, lubricant in the interior space 37 flows in the direction of arrows shown in FIG. 4B. The flowing lubricant is guided by the side surface 42a of the protruding piece 42 and is discharged from the interior space 37 to the exterior space, as shown by the arrows in FIG 4B.

As described above, the lubrication mechanism 10 for the ball bearing according to the first embodiment is provided with the outer race 31, the inner race 32, the rolling element 33 interposed between the outer race 31 and the inner race 32, and a pair of shield members 35, 36 that is provided on both sides of the outer race 31 and inner race 32 and disposed between the outer race 31 and the inner race 32. Thus, the outer race 31, the inner race 32, and the shield members 35, 36 define the interior space 37 located inside the shield members 35, 36, and the exterior space located outside the shield members 35, 36. The interior space 37 is filled with lubricant. In addition, the shield members 35, 36 have communication holes 38 communicating between the interior space 37 and the exterior space, and protruding pieces 41, 42 guiding the lubricant in the interior space 37 to the exterior space through the communication holes 38.

As a result, when the lubricant in the interior space 37 flows along with the rotation of the inner race 32, the lubricant in the interior space 37 is guided by the protruding pieces 41, 42 formed on the shield members 35, 36 and is smoothly discharged through the communication holes 38 to the exterior space. Further, the shield members 35, 36 block the lubricant from entering the interior space 37 from the exterior space. Accordingly, an appropriate amount of lubricant in the bearing is maintained when the rolling member 33 rotates, and the agitation torque generated when lubricant in the bearing is agitated is reduced.

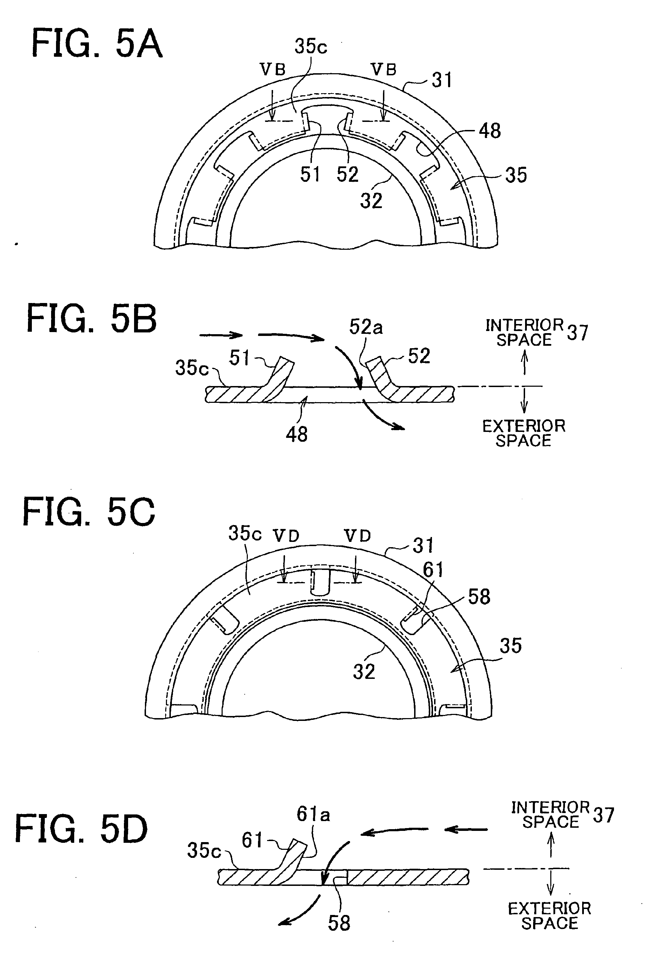

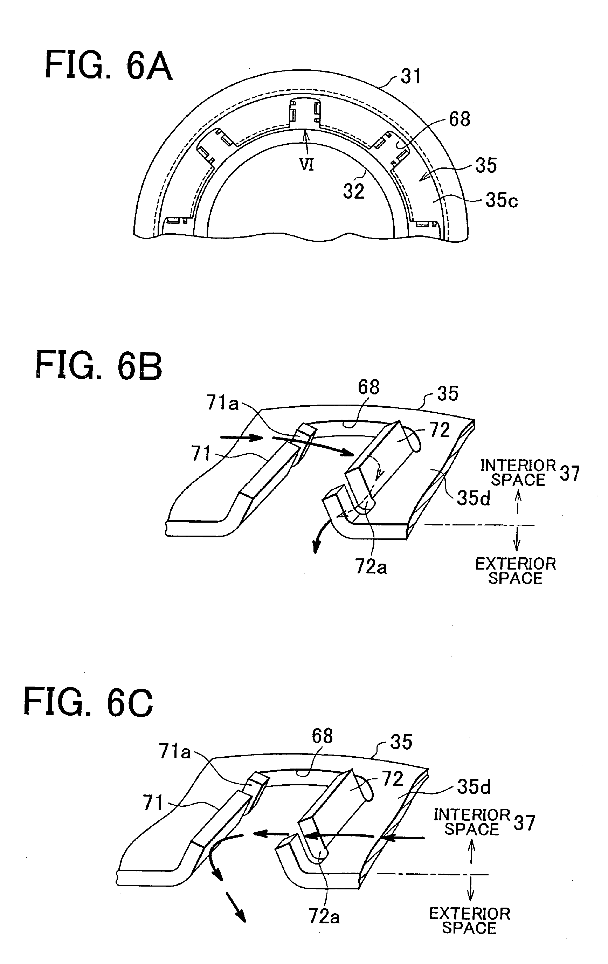

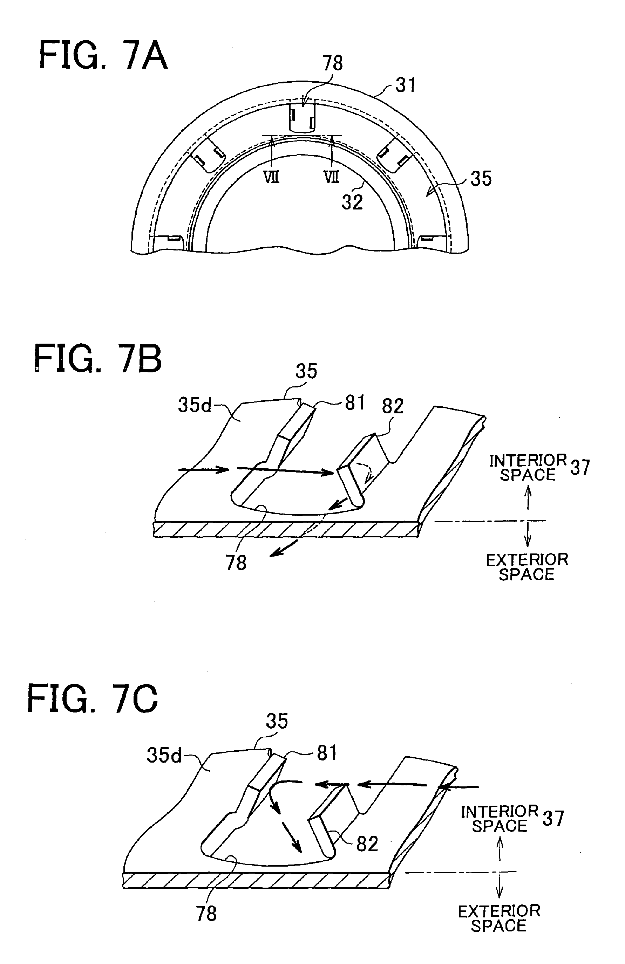

Hereinafter, modified examples of the lubrication mechanism 10 for the ball bearing according the first embodiment of the present invention will be described. FIGs. 5A - 5D show modified examples of the lubrication mechanism for the ball bearing according to the first embodiment of the present invention. FIG. 5A is a partial side elevation view of a modified example of the ball bearing. FIG. 5B is an enlarged cross-sectional view of the ball bearing taken along the line VB-VB in FIG. 5A. FIG. 5C is a partial side elevation view illustrating another modified example of the ball bearing. FIG. 5D is an enlarged cross-sectional view of the ball bearing taken along the line VD-VD in FIG. 5C. FIGs. 6A - 6C show still another modified example of the lubrication mechanism for the ball bearing according to the first embodiment of the present invention. FIG. 6A is a partial side elevation view illustrating the ball bearing viewed from the interior space side. FIG. 6B and FIG. 6C are enlarged perspective views of the ball bearing viewed from the direction VI in FIG. 6A, showing the state of flowing lubricant. Furthermore, FIGs. 7A - 7C show still another modified example of the lubrication mechanism for the ball bearing according to the first embodiment of the present invention. FIG. 7A is a partial side elevation view illustrating the ball bearing viewed from the interior space side. FIG. 7B and FIG. 7C are enlarged perspective views of the ball bearing viewed from the side of the cross-section taken along the line VII-VII in FIG. 7A, showing the state of flowing lubricant.

In the lubrication mechanism 10 for the ball bearing according to the first embodiment, each communication hole 38 is formed as a through-hole penetrating the shield member 35. However, the communication hole may be an indentation formed by cutting off a portion of the shield member in the ball bearing. For example, as shown in FIG. 5A, plural rectangular indentations 48 may be formed on the inner race 32 side (i.e., inner periphery) in the side surface portion 35c of the shield member 35. In addition, as shown in FIG. 5B, a protruding piece 51 and a protruding piece 52 may be formed. The protruding piece 51 is formed along the side of the indentation 48 extending in a radial direction of the shield member 35 and protrudes toward the interior space 37 from the side surface portion 35c. The protruding piece 52 faces the protruding piece 51 across the indentation 48.

In this case, as shown in FIG. 5B, when the inner race 32 of the ball bearing 3 rotates and the lubricant in the interior space 37 flows in the direction of the arrow, the lubricant is guided by the side surface 52a of the protruding piece 52 and is smoothly discharged to the exterior space through the indentation 48. Alternatively, as shown in FIG. 5C, plural rectangular indentations 58 may be formed on the side of the outer race 31 (i.e., outer periphery) in the side surface 35c of the shield member 35. In addition, as shown in FIG. 5D, a protruding piece 61 may be formed along the side of each indentation 58 extending in the radial direction of the shield member 35 and protrudes from the side surface portion 35c toward the interior space 37.

In this construction, as shown in FIG. 5D, when the inner race 32 of the ball bearing 3 rotates and lubricant in the interior space 37 flows in the direction of the arrow, the lubricant is guided by the side surface 61a of the protruding piece 61 and is smoothly discharged to the exterior space through the indentation 58.

Further alternatively, as shown in FIG 6A, plural rectangular indentations 68 may be formed on the inner race 32 side in the side surface portion 35c of the shield member 35. A protruding piece 71 and a protruding piece 72 may be formed. The protruding piece 71 is formed along the side of the indentation 48 extending in a radial direction of the shield member 35 and protrudes toward the interior space 37 from the side surface portion 35c. The protruding piece 72 faces the protruding piece 71 across the indentation 68. Slits 71a and 72a may be respectively formed in the protruding piece 71 and protruding piece 72. The slits 71a and 72a extend in the axial direction cf the shield member 35, and are respectively formed on the outer race 31 side and the inner race 32 side. Note that the slits 71a and 72a are required to be apart from each other in the radial direction of the shield member 35. Thus, in contrast to the example shown in FIG 6A, the slit 71a and the slit 72a may be formed on the inner race 32 side and the outer race 31 side, respectively.

According to this construction, as shown in FIG. 6B, when the inner race 32 of the ball bearing 3 rotates and lubricant in the interior space 37 flows in the direction of the arrow, the lubricant passes through the slit 71a formed in the protruding piece 71, is guided by the protruding piece 72, and is smoothly discharged from the interior space 37 to the exterior space. Furthermore, as shown in FIG. 6C, when the inner race 32 of the ball bearing rotates in the opposite direction and lubricant in the interior space 37 flows in the direction of the arrow, the lubricant passes through the slit 72a in the protruding piece 72, is guided by the protruding piece 71, and is smoothly discharged from the interior space 37 to the exterior space.

Alternatively, as shown in FIG. 7A, plural rectangular indentations 78 may be formed on the outer race 31 side (i.e., outer periphery) of the side surface portion 35c of the shield member 35. In addition, a protruding piece 81 may be formed along the side of each indentation 78 extending in the radial direction of the shield member 35 and protrudes from the side surface portion 35c toward the interior space 37. Furthermore, a protruding piece 82 may be formed along the side of the indentation 78 across the indentation 78 from the protruding piece 81 and apart from the protruding portion 81 in the radial direction.

In this case, as shown in FIG. 7B, when the inner race 32 of the ball bearing 3 rotates and lubricant in the interior space 37 flows in the direction of the arrow, the lubricant passes through the inner race 32 side of the protruding piece 81, is guided by the protruding piece 82, and is smoothly discharged from the interior space 37 to the exterior space. Furthermore, as shown in FIG. 7C, when the inner race 32 of the ball bearing 3 rotates in the opposite direction and the lubricant in the interior space 37 flows in the direction of the arrow, the lubricant passes through the outer race 31 side of the protruding piece 82, is guided by the protruding piece 81, and is smoothly discharged from the interior space 37 to the exterior space.

In the above-described lubrication mechanism 10 for the ball bearing according to the first embodiment, the protruding pieces 41, 42 formed on the shield members 35, 36 protrude from the inside surface 35d toward the interior space 37. Alternatively, however, in the lubrication mechanism for the ball bearing according to the invention, a protruding piece may protrude from the outside surface of the shield member toward the exterior space. If the protruding piece protrudes from the outside surface of the shield member toward the exterior space, when lubricant flows, the lubricant flows from the communication hole to the protruding piece, is guided by the protruding piece, and is discharged to the exterior space.

In the above-described lubrication mechanism 10 for the ball bearing according to the first embodiment, eight communication holes 38 are formed in the shield member 35 at 45 degree intervals. Alternatively, however, in the lubrication mechanism for the ball bearing according to the invention, any number of communication holes 38 other than eight may be formed in the shield member 35. For example, three to six communication holes may be formed in the shield member 35 at regular angular intervals, or ten to twenty communication holes may be formed in the shield member 35 at regular angular intervals.

In the above-described lubrication mechanism 10 for the ball bearing according to the first embodiment, the plural communication holes 38 are formed in the shield member 35 and the protruding pieces 41, 42 are formed. However, alternative to the communication holes, plural indentations without protruding pieces may be formed, each having a predetermined length in the circumferential direction or the radial direction of the outer race and the inner race. Hereinafter, a lubrication mechanism for a bearing in which indentations are formed in the shield member according to a second embodiment will be described.

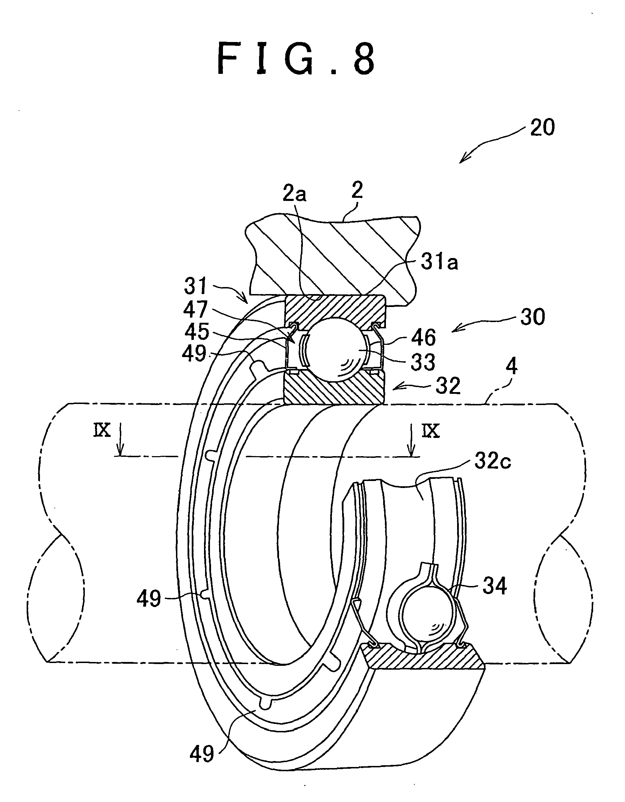

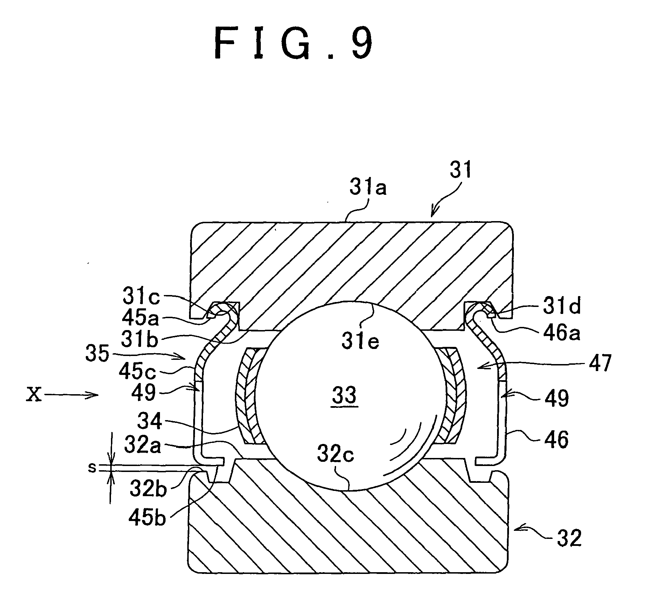

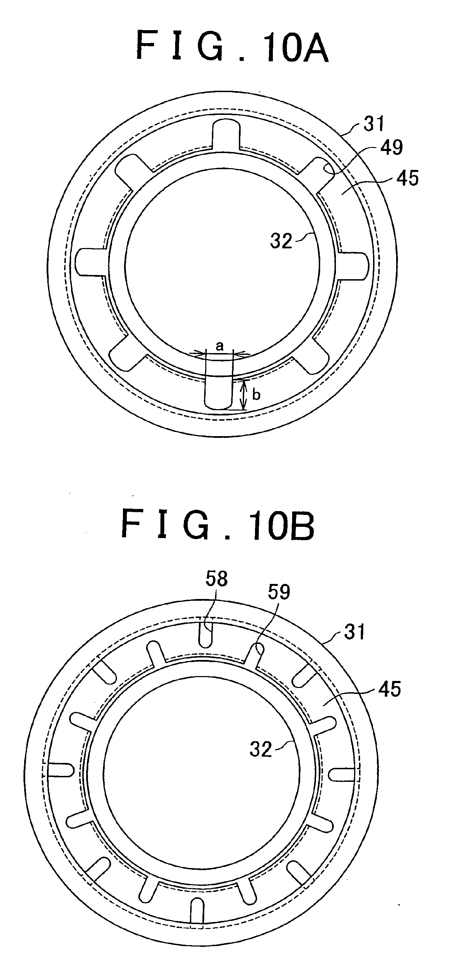

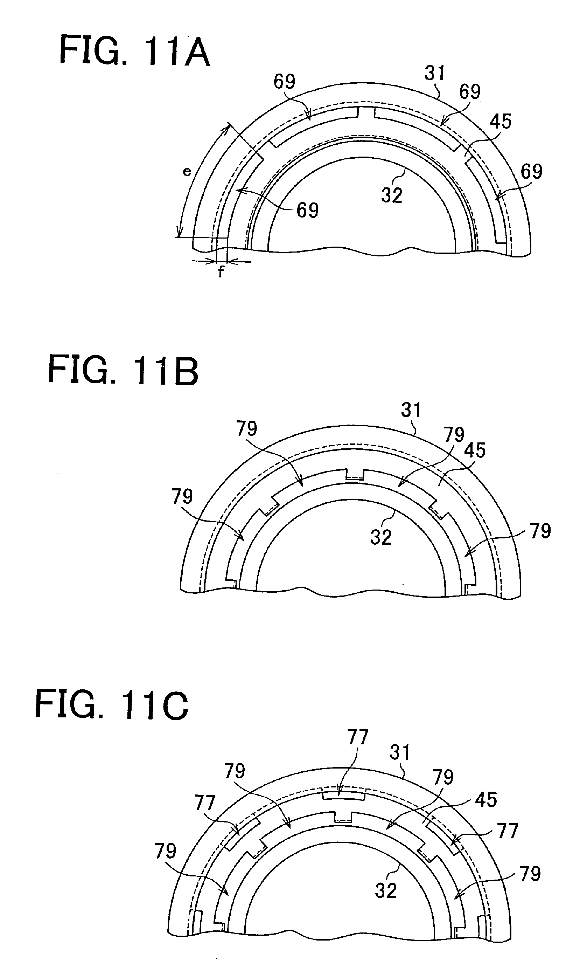

In the second embodiment of the present invention, a lubrication mechanism for a ball bearing used in a transfer for a vehicle is shown. FIG. 8 is a perspective view . showing a lubrication mechanism for a ball bearing according to the second embodiment of the present invention. FIG. 9 is an enlarged cross-sectional view of the ball bearing taken along the line IX-IX in FIG 8. FIGs. 10A and 10B are side elevation views showing examples of the lubrication mechanism for the ball bearing viewed from the direction of the arrow X shown in FIG. 9. More specifically, FIG. 10A is an example of indentations formed in the shield member, extending from the inner race side to the outer race side. FIG. 10B is an example of indentations formed in the shield member, extending from the outer race side to the inner race side. FIGs. 11A - 11C are partial side elevation views showing other examples of the lubrication mechanism for the ball bearing viewed from the direction of the arrow X shown in FIG. 9. More specifically, FIG. 11A is an example of indentations formed in the shield member on the outer race side extending along the circumferential direction. FIG. 11B shows an example of indentations formed in the shield member on the inner race side extending along the circumferential direction. FIG. 11C shows an example of indentations that are formed alternately on the outer race side and on the inner race side and each of which extends along the circumferential direction.

The lubrication mechanism 20 for the ball bearing according to the second embodiment is different from the lubrication mechanism 10 for the ball bearing according to the first embodiment in that the indentations are formed instead of the protruding pieces 41, 42. However, other construction is similar. Accordingly, like structural elements are given like reference numerals as used in the first embodiment shown in FIGs. 1 to 7C. Hereinafter, in particular, only the different portions will be described in detail.

First, the construction of the lubrication mechanism 20 for the ball bearing according to the second embodiment of the present invention will be described. As shown in FIG. 8, the lubrication mechanism 20 for the ball bearing according to the second embodiment includes the ball bearing 30. The ball bearing 30 includes the outer race 31, the inner race 32, plural rolling elements 33, ball-cages 34 that respectively hold the rolling elements 33, and a pair of shield members 45, 46. The shield members 45, 46 are disposed between the outer race 31 and the inner race 32. Thus, the outer race 31, the inner race 32, and shield members 45, 46 define an interior space 47 located inside the shield members 45, 46, and an exterior space located outside the shield members 45, 46. The interior space 47 is filled with lubricant.

As shown in FIG. 9, the shield member 45 is made of sheet-metal and is formed in annular shape by press working, for example. The outer circumferential end portion 45a of the shield member 45 is circularly curved, and is firmly held in the groove 31c when fitted in the groove 31c. The inner circumferential end portion 45b of the shield member 45 is bent toward the rolling member 33, and the cross-section thereof has an L-shape. A gap "s" is formed between the inner circumferential end portion 45b and the outer circumferential surface 32b of the inner race 32. Thus, the inner circumferential end portion 45b does not contact the outer circumferential surface 32b of the inner race 32.

As shown in FIG. 10A, eight indentations 49 that communicate between the interior space 47 and the exterior space of the ball bearing 30 are formed on the inner race 32 side in the side surface portion 45c of the shield member 45 at 45 degree intervals. Each indentation has a length "a" and a length "b" respectively in the circumferential direction and the radial direction of the outer race 31 and inner race 32. The length "a" in the circumferential direction and length "b" in the radial direction of the indentation 49 are appropriately selected based on the design conditions, such as the size or the rotation speed of the ball bearing 30 or property of the lubricant. Here, length "a" is shorter than length "b." The shield member 46 is similar to the shield member 45, and has eight indentations 49.

According to this construction, when the inner race 32 rotates and lubricant in the interior space 47 flows, the lubricant is smoothly discharged to the exterior space through the indentation 49.

Hereinafter, effects of the lubrication mechanism 20 for the ball bearing according to the second embodiment of the present invention will be described. When an engine, which is not shown, starts, the input shaft 4 is rotated by the torque input from the main transmission disposed between the engine and the transfer 1(i.e., upstream of the transfer 1 in the direction in which power from the engine is transmitted), and the inner race 32 fixed to the input shaft 4 also rotates. In this state, along with the rotation of the inner race 32, lubricant in the interior space 47 flows. The flowing lubricant is smoothly discharged to the exterior space through the indentations 49.

As described above, the lubrication mechanism 20 for the ball bearing according to the second embodiment is provided with the outer race 31, the inner race 32, the rolling element 33 interposed between the outer race 31 and the inner race 32, and a pair of shield members 45, 46 that are provided on both sides of the outer race 31 and inner race 32 and disposed between the interior space 47 between the outer race 31 and the inner race 32. Thus, the outer race 31, the inner race 32, and the shield members 45, 46 define the interior space 47 located inside the shield members 45, 46, and the exterior space located outside the shield members 45, 46. The interior space 47 is filled with lubricant. In addition, the shield members 45, 46 have plural indentations 49 that communicate between the interior space 47 and the exterior space, and each of which has the length "a" in the circumferential direction and length "b" in the radial direction of the shield member 45, 46.

As a result, the plural generally rectangular indentations 49 are located such that the longitudinal direction of the rectangular indentation 49 is perpendicular to the flow direction of lubricant. Therefore, when lubricant flows in the interior space 47 along with the rotation of the inner race and the rolling element, lubricant flows out from sides in the longitudinal direction of the plural indentations concurrently or simultaneously toward the exterior space. In addition, because the indentations 49 are formed on the inner race side, when lubricant passes through the indentations 49, a portion of the side surface portion 45c of the shield member 45 does not block the flow of lubricant, as compared with the conventional case in which lubrication holes are formed in the center portion of the shield member. Accordingly, lubricant passes through the indentations 49 more smoothly. If lubricant is discharged to the exterior space through the indentations 49, the shield members 45, 46 block the lubricant from entering the interior space 47 from the exterior space. Accordingly, an appropriate amount of lubricant in the bearing is maintained when the rolling member 33 rotates, and the agitation torque generated when lubricant in the bearing is agitated is reduced.

Hereinafter, modified examples of the lubrication mechanism 20 for the ball bearing according the second embodiment of the present invention will be described.

In the lubrication mechanism 20 for the ball bearing according to the second embodiment, eight indentations 49 that communicate between the interior space 47 and the exterior space of the ball bearing 30 are formed on the inner race 32 side in the side surface portion 45c of the shield member 45 at 45 degree intervals. Alternatively, however, as shown in FIG. 10B, eight indentations 58, having a predetermined length in the radial direction of the outer race 31 and the inner race 32, may be formed on the outer race 31 side in the side surface portion 45c of the shield plate at the positions at 45 degree intervals, and indentations 59 may be formed on the inner race 32 side in the side surface portion 45c of the shield member at 45 degree intervals, such that the indentations 58 and the indentations 59 are arranged alternately along the circumferential direction.

Furthermore, as shown in FIG. 11A, eight indentations 69, each having a length "e" in the circumferential direction of the shield member 45 and a length "f" in the radial direction of the shield member 45, may be formed on the outer race 31 side in the side surface portion 45c of the shield member 45 at 45 degree intervals. Here, length "e" is longer than the length "f."

Furthermore, as shown in FIG. 11B, eight indentations 79, each having a predetermined length in the circumferential direction of the outer race 31 and the inner race 32, may be formed on the inner race 32 side in the side surface portion 45c of the shield member 45 at 45 degree intervals.

Alternatively, as shown in FIG. 11C, eight indentations 77, each having a predetermined length in the circumferential direction of the inner race 31 and outer race 32, may be formed on the outer race 31 side of the shield member 45 at 45 degree intervals, and eight indentations 79 may be formed on the inner race 32 side of the shield member 45 at 45 degree intervals, such that the indentations 77 and the indentations 79 are arranged alternately along the circumferential direction. The length in the circumferential direction and the length in the radial direction of the indentation 58, 59, 69, 77, 79 are appropriately selected based on the design conditions, such as the size or rotation speed of the ball bearing 30, or property of the lubricant.

In the lubrication mechanism 10 for the ball bearing according to the first embodiment and the lubrication mechanism 20 for the ball bearing according to the second embodiment, the ball bearing 3 and ball bearing 30 are used to explain the lubrication mechanism. However, roller bearings may be used, instead of the ball bearings. Hereinafter, an example of a lubrication mechanism for a roller bearing according to a third embodiment will be described.

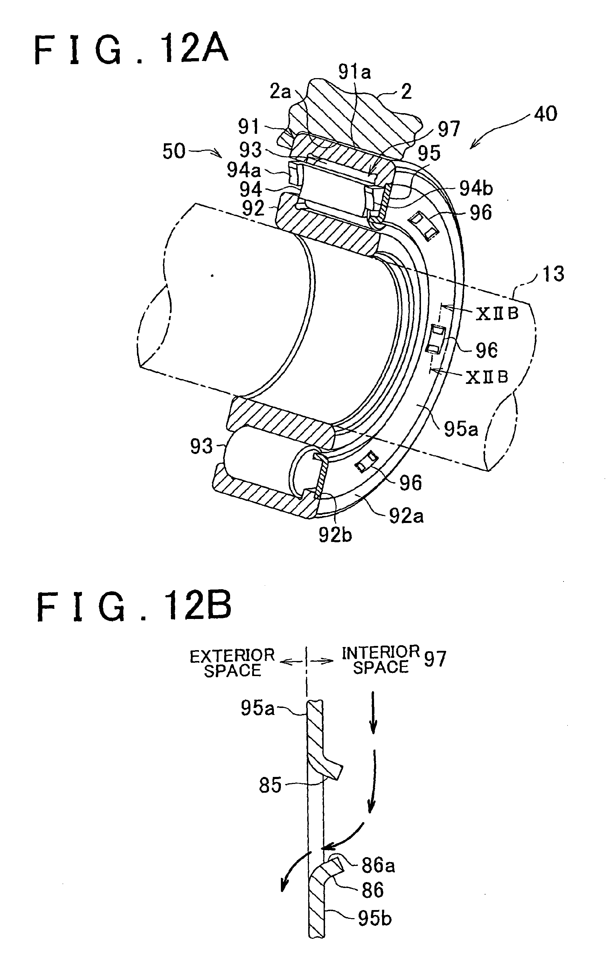

In the third embodiment of the present invention, a lubrication mechanism for a roller bearing used in a transfer for a vehicle is shown. FIGs. 12A and 12B show a lubrication mechanism for a roller bearing according to the third embodiment of the present invention. More specifically, FIG. 12A is a partial perspective view showing the lubrication mechanism for the roller bearing. FIG. 12B is an enlarged cross-sectional view of the roller bearing taken along the line XIIB-XIIB in FIG. 12A.

The lubrication mechanism 40 for the roller bearing according to the third embodiment is different from the lubrication mechanism 10 for the ball bearing according to the first embodiment in that the roller bearing is used instead of the ball bearing; however, the other construction is similar. Accordingly, like structural elements are given like reference numerals as used in the first embodiment shown in FIGs. 1 to 7C. Hereinafter, in particular, only the different portions will be described in detail.

First, the construction of the lubrication mechanism 40 for the roller bearing according to the third embodiment of the present invention will be described. As shown in FIGs. 12A and 12B, the lubrication mechanism 40 for the roller bearing according to the third embodiment includes the roller bearing 50. The roller bearing 50 includes the outer race 91, the inner race 92, plural rollers 93, spacers 94 that hold the rollers 93, and shield members 95. The outer race 91, the inner race 92, and shield members 95 define an interior space 97, which is located inside the shield members 95, and an exterior space located outside the shield members 95. The interior space 97 is filled with lubricant.

The outer race 91 is made of metal material and has an annular shape. The outer circumferential surface 91a of the outer race 91 is fixed to the shaft hole 2a in the transfer case 2. Similarly, the inner race 92 is made of metal material and has an annular shape. The inner race 92 is located radially inward of the outer race 91. The front output shaft 13 shown in FIG. 1 is inserted into and fixed to the inner race 92. An annular groove 92b is formed in a side surface 92a of the inner race 92, and the groove 92b and the outer peripheral surface of the shield member 95 engage with each other.

Each roller 93 is made of metal material and has a columnar shape. The roller 93 is rotatably interposed between the outer race 91 and the inner race 92, and the spacer 94 holds the rolling surface of the roller 93. Concave circular surfaces, each contacting the rolling surface of the roller 93, are formed on both sides of the spacer 94. The concave circular surface has a radius of curvature slightly greater than the radius of curvature of the rolling surface of the roller 93. The roller 93 is held by the spacers 94 and smoothly rotates. The spacer 94 is provided with extended portions 94a, 94b at both ends in the axial direction of the roller bearing 50. The extended portions 94a, 94b are held by the shield members 95, thereby restricting the movement of the spacer 94 in the radial direction. Thus, the behavior of the roller bearing 50 becomes stable.

The shield member 95 is made of sheet-metal and is formed in annular shape by press working, for example. The inner circumferential end portion of the shield member 95 is bent toward the rolling member 93, and the cross-section thereof has an L-Shape. A gap is formed between the inner circumferential end portion of the shield member 95 and the outer circumferential surface of the inner race 92. Thus, the inner circumferential end portion of the shield member 95 does not contact the outer circumferential surface of the inner race 32.

Six communication holes 96 that communicate between the interior space 97 and the exterior space of the roller bearing 50 are formed in the side surface portion 95a of the shield member 95 at 60 degree intervals. Furthermore, a pair of protruding pieces 85, 86 is provided as a guide portion such that the protruding pieces 85, 86 face each other across each communication hole 96 with respect to the flow direction of lubricant in the interior space 97. The pair of protruding pieces 85, 86 protrudes from the inside surface 95b toward the interior space 97. The communication hole 96 has a rectangular shape having a predetermined width in a circumferential direction of the shield member 95 and a predetermined width in the radial direction of the shield member 95. A portion of the side surface portion 95a of the shield member 95 is bent along each shorter side of the rectangular communication hole 96. Thus, the protruding pieces 85, 86 are integrally formed with the shield member 95.

Each protruding piece 85, 86 has a predetermined height so as not to interfere with, for example, the roller 93 rotating in the roller bearing 50, and is inclined with respect to the inside surface 95b. The predetermined width in the circumferential direction and the predetermined width in the radial direction of the communication hole 96 and the inclination angle of the protruding pieces are appropriately selected based on the design conditions, such as the size or rotation speed of the roller bearing 50, or property of the lubricant.

According to this construction, as shown in FIG. 12B, when the inner race 92 of the roller bearing 50 rotates and lubricant in the interior space 97 flows along the arrows, the lubricant is guided by the side surface 86a of the protruding piece 86, and is smoothly discharged to the exterior space through the communication hole 96.

As described above, the lubrication mechanism 40 for the roller bearing according to the third embodiment is provided with the outer race 91, the inner race 92, the rollers 93 interposed between the outer race 91 and the inner race 92, and shield members 95 that are provided on both sides of the outer race 91 and inner race 92, and disposed between the outer race 91 and the inner race 92. The interior space 97 defined by the outer race 91, the inner race 92, and the shield members 95 is filled with lubricant. In addition, the shield members 95 have communication holes 96 communicating between the interior space 97 and the exterior space, and protruding pieces 85, 86 guiding the lubricant in the interior space 97 to the exterior space through the communication holes 96.

As a result, when the outer race 91 and roller 93 rotate, or when the inner race 92 and roller 93 rotate, the lubricant in the interior space 97 flows along with the rotation thereof. The flowing lubricant is discharged to the exterior space through the communication holes 96, and is guided by the protruding pieces 85, 86 so that the lubricant is smoothly discharged through the communication holes 96 to the exterior space. On the other hand, the shield members 95 block the lubricant from entering the interior space 97 from the exterior space. Accordingly, an appropriate amount of lubricant is maintained in the bearing when the rollers 93 rotate, and the agitation torque generated when lubricant in the interior space 97 is agitated is reduced.

In the lubrication mechanism 40 for the roller bearing according to the third embodiment of the present invention, the plural communication holes 96 and protruding pieces 85, 86 are formed in/on the shield member 95. However, instead of the communication holes, plural indentations without the protruding pieces may be formed such that each indentation has a predetermined length in the circumferential direction or the radial direction of the outer race and the inner race. Hereinafter, a lubrication mechanism for a roller bearing, in which indentations are formed in a shield member, according to a fourth embodiment of the present invention will be described.

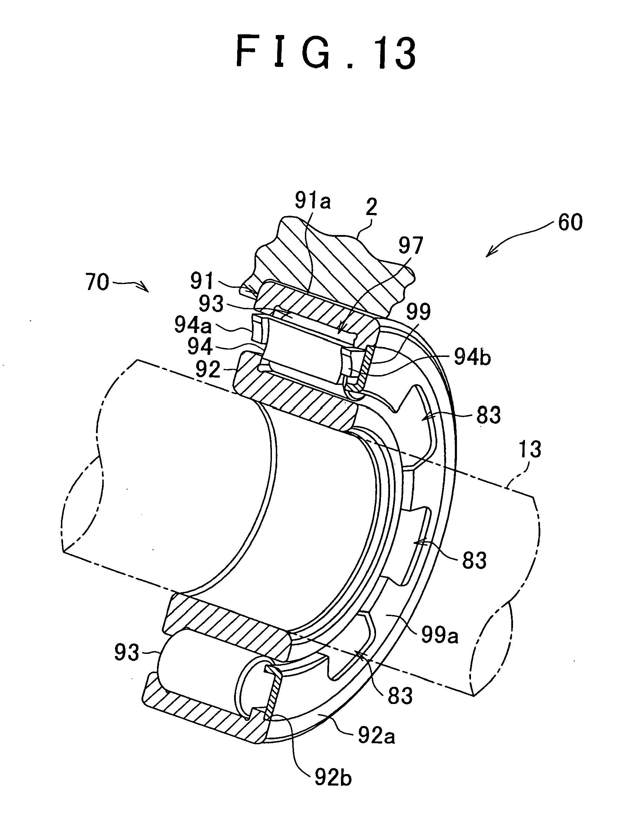

In the fourth embodiment of the present invention, a lubrication mechanism for a roller bearing used in a transfer for a vehicle is shown. FIG. 13 is a partial perspective view showing the lubrication mechanism for the roller bearing according to the fourth embodiment of the present invention.

The lubrication mechanism 60 for the roller bearing according to the fourth embodiment is different from the lubrication mechanism 40 for the ball bearing according to the third embodiment in that indentations are formed instead of the communication holes formed in the shield member 95; however, the other construction is similar. Accordingly, like structural elements are given like reference numerals as used in the third embodiment shown in FIGs. 12A, 12B. Hereinafter, in particular, only the different portions will be described in detail.

First, the construction of the lubrication mechanism 60 for the roller bearing according to the fourth embodiment of the present invention will be described. As shown in FIG 13, the lubrication mechanism 60 for the roller bearing according to the fourth embodiment includes the roller bearing 70. The roller bearing 70 includes the outer race 91, the inner race 92, plural rollers 93, spacers 94 that hold the rollers 93, and a pair of shield members 99. The outer race 91, the inner race 92, and shield members 99 define an interior space 97, which is located inside the shield members 99, and an exterior space located outside the shield members 99. The interior space 97 is filled with lubricant.

Each roller 93 is made of metal material and has a columnar shape. The roller 93 is rotatably interposed between the outer race 91 and the inner race 92, and the spacer 94 holds the rolling surface of the roller 93. Concave circular surfaces, each contacting the rolling surface of the roller 93, are formed on both sides of the spacer 94. The concave circular surface has a radius of curvature slightly greater than the radius of curvature of the rolling surface of the roller 93. The roller 93 is held by the spacers 94 and smoothly rotates. The spacer 94 is provided with extended portions 94a, 94b at both ends in the axial direction of the roller bearing 60. The extended portions 94a, 94b are held by the shield member 99, thereby restricting the movement of the spacer 94 in the radial direction of the roller bearing 60. Thus, the behavior of the roller bearing 70 becomes stable.

The shield member 99 is made of sheet-metal and is formed in annular shape by press working, for example. The inner circumferential end portion of the shield member 99 is bent toward the rolling member 93, and the cross-section thereof has an L-shape. A gap is formed between the inner circumferential end portion of the shield member 99 and the outer circumferential surface of the inner race 92. Thus, the inner circumferential end portion of the shield member 95 does not contact the outer circumferential surface of the inner race 92.

Six indentations 83 that communicate between the interior space 97 and the exterior space of the roller bearing 70 are formed in the side surface portion 99a of the shield member 99 at 60 degree intervals. Each indentation 83 has a generally rectangular shape with a predetermined length in the circumferential direction and a predetermined length in the radial direction of the outer race 91 and the inner race 92. The predetermined length in the circumferential direction and the predetermined length in the radial direction of the indentation 83 are appropriately selected based on the design conditions, such as the size or rotation speed of the roller bearing 70 or property of the lubricant.

According to this construction, when the inner race 92 of the roller bearing 70 rotates, and lubricant in the interior space 97 flows, the lubricant is smoothly discharged to the exterior space through the indentations 83.

As described above, the lubrication mechanism 60 for the roller bearing according to the fourth embodiment is provided with the outer race 91, the inner race 92, the rollers 93 interposed between the outer race 91 and the inner race 92, and shield members 99 that are provided on both sides of the outer race 91 and inner race 92, and disposed between the outer race 91 and the inner race 92. The outer race 91, the inner race 92, and the shield members 99 define the interior space 97 located inside the shield members 99, and the exterior space located outside the shield members 99. The interior space 97 is filled with lubricant. In addition, the shield members 99 have indentations 83 communicating between the interior space 97 and the exterior space. As a result, when the outer race 91 and roller 93 rotate, or when the inner race 92 and roller 93 rotate, the lubricant in the interior space 97 flows along with the rotation thereof. The flowing lubricant is discharged to the exterior space through the indentations 83.

The shield members 99 block the lubricant from entering the interior space 97 from the exterior space. Accordingly, because an appropriate amount of lubricant in the bearing is maintained when the roller 93 rotates, and the amount of lubricant is reduced, the agitation torque generated when the lubricant in the interior space 97 is agitated is reduced.

In the above embodiments, the shield member is supported by immobile or unrotating one of the outer race and inner race. However, the lubrication mechanism for the ball bearing according to the present invention is not limited thereto. The shield member may be supported by rotating one of the outer race and inner race.

The bearing used in the lubrication mechanism for a bearing in the present invention is not limited to the ball bearing used in the first and second embodiments or the roller bearing used in the third and fourth embodiments. In other words, a double row ball bearing, angular ball bearing, self-aligning ball bearing, tapered roller bearing, needle bearing may be used.

Furthermore, the lubrication mechanism for a bearing according to the present invention is not limited to those used in a transfer of a vehicle. In other words, the lubrication mechanism for the bearing may be used in an industrial machine, transportation machine, electric machine, measurement instrument, and the like.

As described above, according to the present invention, lubricant is smoothly discharged to the exterior space through the guide portions and communication holes, or indentations formed in the shield members, and the shield members block the lubricant from entering the interior space from the exterior space. Accordingly, an appropriate amount of lubricant in the bearing is maintained when the rolling elements rotate, and the agitation torque generated when the lubricant in the bearing is agitated is reduced. Thus, the present invention is broadly applicable to the lubrication mechanism for a bearing.

While some embodiments of the invention have been illustrated above, it is to be understood that the invention is not limited to details of the illustrated embodiments, but may be embodied with various changes, modifications or improvements, which may occur to those skilled in the art, without departing from the spirit and scope of the invention.

## Claims

1. A lubrication mechanism for a bearing having an outer race (31); an inner race (32) located radially inward of the outer race; a rolling element (33) interposed between the outer race and the inner race; and a pair of shield members (35, 36) provided on both sides of the outer race and the inner race, wherein the outer race, the inner race and the pair of shield members define an interior space (37) located inside the pair of shield members and an exterior space located outside the pair of shield members, and the interior space is filled with lubricant, **characterized in that** a communication hole (38) communicating between the interior space and the exterior space is formed in the pair of shield members, and a guide portion (41, 42) that guides the lubricant in the interior space to the exterior space through the communication hole is provided.

2. The lubrication mechanism according to claim 1, wherein the guide portion includes a protruding piece that protrudes from the inside surface of the pair of shield members toward the interior space.

3. The lubrication mechanism according to claim 1, wherein the guide portion includes a protruding piece that protrudes from the outside surface of the pair of shield members toward the exterior space.

4. The lubrication mechanism according to claim 2 or 3, wherein the protruding piece comprises a pair of protruding pieces extending along a radial direction of the pair of shield members and facing each other across the communication hole.

5. The lubrication mechanism according to claim 4, wherein the protruding pieces (71, 72) respectively have slits (71a, 72a) each extending in an axial direction of the pair of shield members, and the slits are apart from each other in a radial direction of the pair of shield members.

6. The lubrication mechanism according to claim 1, wherein the communication hole has a generally rectangular shape, and the protruding piece is provided along a side of the communication hole extending in the radial direction of the pair of the shield member.

7. The lubrication mechanism according to claim 6, wherein the protruding piece is formed by bending a portion of the pair of shield members along the side of the communication hole.

8. A lubrication mechanism for a bearing having an outer race (31); an inner race (32) located radially inward of the outer race; a rolling element (33) interposed between the outer race and the inner race; and a pair of shield members (35, 36) provided on both sides of the outer race and the inner race, wherein the outer race, the inner race and the pair of shield members define an interior space (37) located inside the pair of shield members and an exterior space located outside the pair of shield members, and the interior space is filled with lubricant, **characterized in that** the pair of shield members having a plurality of indentations (48) that communicates between the interior space and the exterior space.

9. The lubrication mechanism according to claim 8, wherein each of the indentations has a width in a radial direction of the pair of shield members longer than a width in a circumferential direction of the pair of shield members.

10. The lubrication mechanism according to claim 8, wherein each of the indentations has a width in a radial direction of the pair of shield members shorter than a width in a circumferential direction of the pair of shield members.

11. The lubrication mechanism according to claim 8, wherein the plurality of indentations are formed on the side of the inner race at regular angular intervals.

12. The lubrication mechanism according to claim 8, wherein the plurality of indentations are formed on the side of the outer race at regular angular intervals.

13. The lubrication mechanism according to claim 8, wherein the plurality of indentations includes first indentations formed on the side of the outer race at regular angular intervals and second indentations formed on the side of the inner race at regular angular intervals, and the first indentations and the second indentations are arranged alternately along the circumferential direction of the pair of shield members.

14. The lubrication mechanism according to claim 8, further comprising a protruding piece that extends along a radial direction of the pair of shield members.

15. The lubrication mechanism according to any one of claims 1 to 14, wherein the pair of shield members is supported by an unrotating one of the outer race and the inner race.
